(19) **Europäisches Patentamt**
**European Patent Office**
**Office européen des brevets**

(11) **EP 4 375 619 A2**

(12) **DEMANDE DE BREVET EUROPEEN**

(43) Date de publication:
**29.05.2024 Bulletin 2024/22**

(21) Numéro de dépôt: **23209954.9**

(22) Date de dépôt: **15.11.2023**

(51) Classification Internationale des Brevets (IPC):
**G01C 21/20** (2006.01)  **H04W 4/02** (2018.01)

(52) Classification Coopérative des Brevets (CPC):
**G01C 21/20; H04W 4/024**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.11.2022 FR 2212388**

(71) Demandeur: **IFP Energies nouvelles**
**92500 Rueil-Malmaison (FR)**

(72) Inventeurs:
- **GONZALEZ DE COSSIO ECHEVERRIA, Francisco Jose**
  **92852 RUEIL-MALMAISON CEDEX (FR)**
- **SABIRON, Guillaume**
  **92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(54) **PROCEDE DE DETERMINATION D'UN MODE DE TRANSPORT D'UN TRAJET PARCOURU PAR AU MOINS UN UTILISATEUR**

(57) La présente invention concerne un procédé de détermination du mode de transport (MDT) d'un trajet parcouru. Pour ce projet, on acquiert des données de géolocalisation horodatées (GPS) du trajet et on met en oeuvre une succession d'étapes (SET) jusqu'à la détermination du mode de transport (MDT). Chaque étape de la succession d'étapes (SET) est liée à une catégorie différente du mode de transport, certaines étapes mettant en oeuvre des modèles entraînés sur des données de géolocalisation horodatées d'apprentissage (DAP).

[Fig 1]

## Description

## Domaine technique

La présente invention concerne le domaine de la détermination d'un mode de transport d'un trajet parcouru par un utilisateur.

Le domaine du transport revêt un aspect essentiel de la vie quotidienne dont l'économie mondiale dépend fortement. Cependant, il joue également un rôle majeur dans la dégradation de la qualité de l'air et dans l'augmentation des émissions de $CO_2$, en particulier dans les zones urbaines. Selon l'Organisation Mondiale de la Santé (OMS), le transport est l'une des principales sources de pollution atmosphérique, et il est directement lié à de multiples maladies respiratoires et cardiovasculaires. En outre, le transport mondial est à l'origine d'environ 24 % des émissions directes de $CO_2$ provenant de la combustion de carburants, dont près des trois quarts correspondent aux voitures, camions, bus et motos, ce qui aggrave encore le phénomène de réchauffement climatique. Parmi les autres types d'émissions nocives, figurent les oxydes d'azote (NOx), l'ozone troposphérique ($O_3$) et les particules (PM), qui dépassent généralement les limites recommandées. L'importance du rôle des transports dans la qualité de l'air se reflète également dans le nombre croissant d'actions politiques menées en Europe au cours des dernières années, ce qui en fait un sujet central. Les stratégies visant à s'attaquer à ce problème sont notamment les suivantes : normes en matière d'efficacité des véhicules et des carburants à faible teneur en carbone, développement et incitations de véhicules à faibles émissions, politiques fiscales et régimes d'imposition, développement des infrastructures routières et des transports en commun.

L'une des caractéristiques fondamentales d'un déplacement est le mode de transport utilisé. En effet, la mobilité moderne ne se limite plus à la marche ou à la course, et différents types de véhicules motorisés et non motorisés sont désormais à la disposition de la population. Les différentes caractéristiques des moyens de transport choisis reflètent des aspects essentiels de la mobilité, notamment : le mode de vie, l'optimisation du temps et du budget, le choix des itinéraires, les émissions polluantes, etc.

Ce choix des utilisateurs vis-à-vis des différents modes de transport possibles et la répartition de ces choix des différents utilisateurs dans une zone géographique donnée sont aujourd'hui mal connus alors qu'ils sont essentiels pour l'aménagement de réseaux de transports routiers, de transport en commun ou de mobilité douce (vélo et trottinettes notamment). A ce jour, les pouvoirs publics disposent d'outils d'analyse permettant de mesurer les choix de mobilité et l'impact potentiel des travaux d'aménagement (routier, transports en commun, mobilité douce) essentiellement fondés sur des approches de modélisation de la mobilité. Cependant, ces modèles sont très difficiles à mettre en place (besoin de données d'enquête de population très coûteuses, besoin d'un effort conséquent de calibration), à maintenir (la maintenance est déléguée aux bureaux d'études, il est donc difficile de faire évoluer l'outil rapidement), à mettre à jour (les enquêtes de population sont menées tous les 5 à 10 ans).

Il existe donc un besoin de caractériser les évolutions rapides de la mobilité en déterminant les modes de transport des utilisateurs en fonction de leurs trajets, à partir de données réelles de mobilité.

## Technique antérieure

La collecte et l'analyse massives de données sur la mobilité ont fait un bond en avant avec le développement de capteurs portables très accessibles, inclus désormais dans des appareils tels que les téléphones mobiles et les montres connectées. En effet, les innovations technologiques géospatiales ont permis de surmonter les obstacles habituels des enquêtes statistiques ou des entretiens traditionnels, par exemple : mises à jour séparées par des années, des coûts extrêmement élevés, une faible résolution spatio-temporelle et une faible fiabilité due au facteur humain. Les données de mobilité peuvent être récupérées par différents types de capteurs, notamment : le réseau cellulaire, le WiFi, le Bluetooth et le capteur GPS, qui ont été mis à disposition pour la première fois sur un téléphone mobile vers l'année 1999. Deux types importants et très différents de données de mobilité sont les « Call detail Records » ou CDRs (pouvant être traduit par enregistrement de détails d'appel), et les données de géolocalisation (par exemple GPS de l'anglais « Global Positioning System » pouvant être traduit par système de positionnement global) ; notamment, le premier a tendance à avoir un taux de pénétration plus important tandis que le second a une résolution spatio-temporelle beaucoup plus élevée.

Les applications concernant les données de mobilité sont innombrables et couvrent des domaines distincts tels que : l'exploration des schémas de mobilité, la planification urbaine et routière, la prévision du trafic, la surveillance de la santé et des transports, etc. Dans ce contexte, une caractéristique essentielle est le mode de transport utilisé, et demander à l'utilisateur de fournir des informations est problématique (manque de motivation ou d'attention, et/ou difficultés liées aux déplacements multimodaux, etc.). C'est pourquoi la reconnaissance automatique du mode de transport à partir de données GPS est un sujet de la plus haute importance dans la science des transports depuis plusieurs années ; les premières recherches étaient basées sur un système d'information géographique SIG (ou en anglais GIS pour « Géographie information system ») et des règles heuristiques simples. De telles règles heuristiques sont décrites notamment dans le document : STOPHER, P., CLIFFORD, E., ZHANG, J. and FITZGERALD, C., Deducing Mode and Purpose from GPS Data, 2007, Working paper ITLS-WP-08-06. Bien qu'elles soient encore plus difficiles, les recherches récentes portent également sur l'identification du mode de transport à partir de données clairsemées telles que les données CDR. Une telle méthode est décrite notamment dans la demande de brevet dont le numéro de dépôt est FR 21/13219.

La littérature sur l'identification du mode de transport à partir de données GPS est vaste et en constante augmentation. Elle suit de près les innovations en matière de capteurs GPS, la croissance du taux de pénétration et les améliorations de la puissance de calcul pour des analyses plus efficaces. Étant donné l'apparente simplicité du problème, il peut sembler surprenant qu'il n'existe pas de solution totalement satisfaisante. En effet, la grande variation des techniques existantes est la preuve de la difficulté de cette tâche. Cependant, on remarque que la plupart des études actuelles sont basées sur des méthodes d'apprentissage supervisé. On peut noter que plusieurs travaux de la littérature incluent des trajets multimodaux, ce qui nécessite un découpage des trajectoires. L'automatisation de cette étape préliminaire est un sujet de recherche à part entière.

Les algorithmes courants de détection des modes de transport comprennent : les réseaux de neurones artificiels, les réseaux bayésiens, les réseaux de neurones convolutifs, les modèles discrets de Markov cachés, les arbres de décision, les techniques de maximisation de l'espérance, les règles de « fuzzy logic » (pouvant être traduit par logique floue), les algorithmes basés sur les systèmes d'information géographique SIG (ou en anglais GIS pour « Géographie information system »), les réseaux convolutifs graphiques, les « K-nearest neighbors » (pouvant être traduit par les K voisins les plus proches), les régressions logistiques, les forêts aléatoires, les réseaux de neurones récurrents, les machines à vecteurs de support, l'apprentissage profond non supervisé, etc.

Les variables d'entrée des capteurs GPS sont très variées, elles comprennent par exemple : les paires de latitude et de longitude, le temps/longueur du trajet, les fonctions des signaux de vitesse, d'accélération, de secousse et/ou de cap (moyenne, médiane, écart type, percentiles, covariances, etc.), la qualité du signal GPS, le taux d'arrêt, les informations sur les « points critiques », et autres. Plusieurs études ont également utilisé des données SIG externes incluant des couches sous-jacentes, des réseaux routiers et/ou des données de transport public.

Enfin, la sortie est le mode de transport prédit ou, parfois, la catégorie de mode de transport. La plupart des études sont capables de détecter entre quatre et cinq modes, et ont tendance à inclure la marche, la voiture et le bus (rarement la moto). La précision peut atteindre jusqu'à 90 %, mais l'interprétation et/ou la comparaison des résultats entre différentes études n'a souvent aucun sens ; les ensembles de données utilisés vont d'un seul utilisateur et de quelques trajets à des centaines d'utilisateurs, la qualité diffère et est souvent non réaliste, la fréquence GPS varie considérablement (de 1 à 1/30 Hz), etc.

Les travaux fondamentaux sur la détection des modes de transport présentés ci-dessous sont classés par ordre chronologique afin de refléter l'évolution naturelle des différentes techniques appliquées.

Les premières recherches appliquent une approche d'apprentissage supervisé qui consiste en une méthode de segmentation, un modèle d'inférence (arbre de décision, réseau bayésien, ...), et un algorithme de post-traitement basé sur la probabilité conditionnelle. Les modes considérés sont la marche, le bus, le vélo et la voiture. Il peut être proposé alors un arbre de décision suivi d'un modèle de Markov caché de premier ordre pour distinguer les modes stationnaire, marche, course, vélo et motorisé.

Par exemple, le document : « GONZALEZ, P.A., et al., Automating mode détection for travel behaviour analysis by using global positioning systems enabled mobile phones and neural networks, 2010, Intelligent Transport Systems » suggère l'utilisation de réseaux de neurones pour classer les modes de base que sont la marche, le bus et la voiture.

La plupart des développements ne permettent pas de distinguer de manière robuste les déplacements en motocyclette des déplacements en véhicule automobile. De plus, certains des développements ne sont pas utilisables en temps réel, car le temps nécessaire et la mémoire informatique nécessaire sont importantes.

La demande de brevet FR3112398 (US 2022/010220) permet une déterminer un mode de détermination d'un mode de transport d'un trajet, par une étude de similarité entre le trajet acquis et des trajets antérieurs au moyen d'une distance modifiée de Fréchet discrète. La précision et la robustesse de la détermination du mode de transport obtenues par ce procédé peuvent encore être améliorées.

## Résumé de l'invention

La présente invention a pour but de déterminer le mode de transport d'un trajet parcouru par un utilisateur en temps réel (juste à la fin du trajet), de manière robuste, et en prenant compte un grand nombre de modes de transport possibles, y compris la motocyclette. Dans ce but, la présente invention concerne un procédé de détermination du mode de transport d'un trajet parcouru. Pour ce projet, on acquiert des données de géolocalisation horodatées du trajet et on met en oeuvre une succession d'étapes jusqu'à la détermination du mode de transport. Chaque étape de la succession d'étapes est liée à une catégorie différente du mode de transport, certaines étapes mettant en oeuvre des modèles entraînés sur des données de géolocalisation horodatées d'apprentissage. L'utilisation d'une étape par catégorie de mode de transport au sein d'une succession d'étapes permet d'être plus robuste. De plus, l'utilisation de modèles entraînés par des données permet une détermination rapide, et par conséquent, l'usage en temps réel.

L'invention concerne un procédé de détermination d'un mode de transport d'un trajet parcouru par au moins un utilisateur, au moyen d'un capteur de géolocalisation. Pour ce procédé, on met en oeuvre les étapes suivantes :

a. On acquiert des données de géolocalisation horodatées dudit trajet parcouru par ledit utilisateur au moyen dudit capteur de géolocalisation ;

b. On détermine un mode de transport dudit trajet au moyen desdites données de géolocalisation horodatées acquises, en mettant en oeuvre une succession d'étapes jusqu'à la détermination dudit mode de transport, les étapes de ladite succession d'étapes étant choisies parmi au moins les étapes suivantes :

i. On applique auxdites données de géolocalisation horodatées acquises un modèle entraîné à partir de données de géolocalisation horodatées d'apprentissage et/ou un filtre heuristique construit à partir desdites données de géolocalisation d'apprentissage pour déterminer si le mode de transport est motorisé ou non ;

ii. On applique auxdites données de géolocalisation horodatées acquises un modèle entraîné à partir de données de géolocalisation horodatées d'apprentissage pour déterminer si le mode de transport est la motocyclette ;

iii. On applique auxdites données de géolocalisation horodatées acquises au moins un algorithme de cartospondance pour déterminer si le mode de transport est un transport en commun ne circulant pas sur un réseau routier ; et

iv. On applique auxdites données de géolocalisation horodatées acquises au moins un modèle entraîné à partir de données de géolocalisation horodatées d'apprentissage pour déterminer si le mode de transport est un véhicule circulant sur un réseau routier.

Selon un mode de réalisation de l'invention, on acquiert des données historiques de trajets dudit utilisateur, et ladite succession d'étapes comprend en outre une étape de comparaison desdites données de géolocalisation horodatées acquises avec lesdites données historiques, et on détermine le mode de transport si les données de géolocalisation horodatées acquises sont similaires avec lesdites données historiques d'au moins un trajet, de préférence on détermine une similarité au moyen de calcul d'une distance, telle que la distance de Fréchet ou la distance d'Hausdorff.

Avantageusement, ledit mode de transport est déterminé parmi la marche à pied, la course à pied, la bicyclette, la motocyclette, le tramway, l'avion, le train, le métro, le véhicule automobile et le bus.

Conformément à une mise en oeuvre, le procédé comprend une étape préalable de détermination d'au moins un descripteur dudit trajet à partir desdites données de géolocalisation horodatées acquises, et au moins une étape de ladite succession d'étapes prend en compte ledit au moins un descripteur.

Selon un aspect, la détermination d'un mode de transport en commun ne circulant pas sur un réseau routier est mise en oeuvre au moyen d'un algorithme de cartospondance et de la distance d'Hausdorff.

Selon une option de réalisation, on acquiert des données de véhicules appartenant audit utilisateur, et on adapte ladite succession d'étapes en fonction desdites données de véhicules appartenant audit utilisateur.

Conformément à un mode de réalisation, lesdits modèles sont entraînés à partir de données de géolocalisation horodatées d'apprentissage par apprentissage automatique au moyen d'au moins un réseau de neurones.

Selon une mise en oeuvre, ladite succession d'étapes met d'abord en oeuvre la détermination d'un mode de transport motorisé ou non.

Conformément à un aspect, ladite succession d'étapes met en oeuvre la détermination d'un mode de transport en motocyclette avant la détermination d'un mode de transport en transport en commun ne circulant pas sur un réseau routier et avant la détermination d'un mode de transport circulant sur un réseau routier.

Conformément à une option, ladite succession d'étapes met en oeuvre la détermination d'un mode de transport en commun ne circulant pas sur un réseau routier avant la détermination d'un mode de transport circulant sur un réseau routier.

Selon un mode de réalisation, ledit filtre heuristique est basé sur une analyse statistique desdites données de géolocalisation horodatées d'apprentissage.

De manière avantageuse, on applique un algorithme de cartospondance par mode de transport en commun ne circulant pas sur un réseau routier.

Selon un mode de réalisation, si le mode de transport est déterminé non motorisé, ledit modèle entraîné et/ou ledit filtre heuristique détermine en outre le type de transport non motorisé. D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1 illustre les étapes du procédé selon un premier mode de réalisation de l'invention.

La figure 2 illustre les étapes du procédé selon un deuxième mode de réalisation de l'invention.

La figure 3 illustre les étapes du procédé selon un troisième mode de réalisation de l'invention.

La figure 4 illustre les étapes du procédé selon un quatrième mode de réalisation de l'invention.

La figure 5 illustre un premier exemple de trajet sur lequel est appliqué le procédé selon un mode de réalisation de l'invention.

La figure 6 illustre un deuxième exemple de trajet sur lequel est appliqué le procédé selon un mode de réalisation de l'invention.

La figure 7 illustre un troisième exemple de trajet sur lequel est appliqué le procédé selon un mode de réalisation de l'invention.

**Description des modes de réalisation**

L'invention concerne un procédé de détermination d'un mode de transport d'un trajet parcouru par un utilisateur, au moyen d'un capteur de géolocalisation. En d'autres termes, pour un trajet réalisé par un utilisateur, le procédé détermine quel moyen de transport a été utilisé pour ce trajet parcouru, par exemple en bicyclette, en bus, en train, en motocyclette, etc.

Pour le procédé selon l'invention, le trajet parcouru par l'utilisateur peut être un trajet monomodal, c'est-à-dire un trajet utilisant un unique mode de transport entre le départ et l'arrivée.

Un capteur de géolocalisation est un capteur mesurant la position de l'utilisateur ainsi que le moment de la mesure. On parle alors de géolocalisation horodatée. Un tel capteur de géolocalisation peut utiliser la technologie GPS, la technologie Galliléo ou toute technologie équivalente. Avantageusement, le capteur de géolocalisation peut être prévu dans le téléphone intelligent (de l'anglais « smartphone ») de l'utilisateur, ou dans une montre connectée, ou tout objet connecté ou tout objet analogue.

Le procédé selon l'invention met en oeuvre également un ensemble de données antérieures de trajets parcourus (par le même utilisateur et/ou par d'autres utilisateurs). Pour cet ensemble de données antérieures, on connaît les données de géolocalisation horodatées ainsi que le mode de transport qui a été utilisé. Cet ensemble de données antérieures est appelé, dans la suite de la demande, données de géolocalisation horodatées d'apprentissage. Ainsi, le procédé selon l'invention peut comporter une étape d'acquisition voire de mesure de données de géolocalisation horodatées d'apprentissage.

Le procédé selon l'invention comprend les étapes suivantes :

1) Acquisition des données de géolocalisation horodatées

2) Mise en oeuvre d'une succession d'étapes pour la détermination du mode de transport

2.1) Détermination d'un mode de transport non motorisé

2.2) Détermination d'un mode de transport en motocyclette

2.3) Détermination d'un mode de transport en commun hors réseau routier

2.4) Détermination d'un mode de transport en véhicule motorisé sur réseau routier

Les étapes de la succession d'étapes sont réalisées jusqu'à la détermination d'un mode de transport. En d'autres termes, une fois qu'une étape a identifié un mode de transport les autres étapes ne sont pas réalisées. Les étapes de cette succession d'étapes peuvent être mises en oeuvre dans cet ordre ou dans tout ordre différent. L'étape 1 est mise en oeuvre au moyen du capteur de géolocalisation, et l'étape 2 peut être mise en oeuvre par des moyens informatiques, tel qu'un ordinateur, un serveur, ou un téléphone portable. Ces étapes seront détaillées dans la suite de la description. Ces étapes peuvent de préférence être réalisées en temps réel, c'est-à-dire immédiatement après la fin du trajet. En effet, le procédé selon l'invention peut être réalisé en quelques secondes.

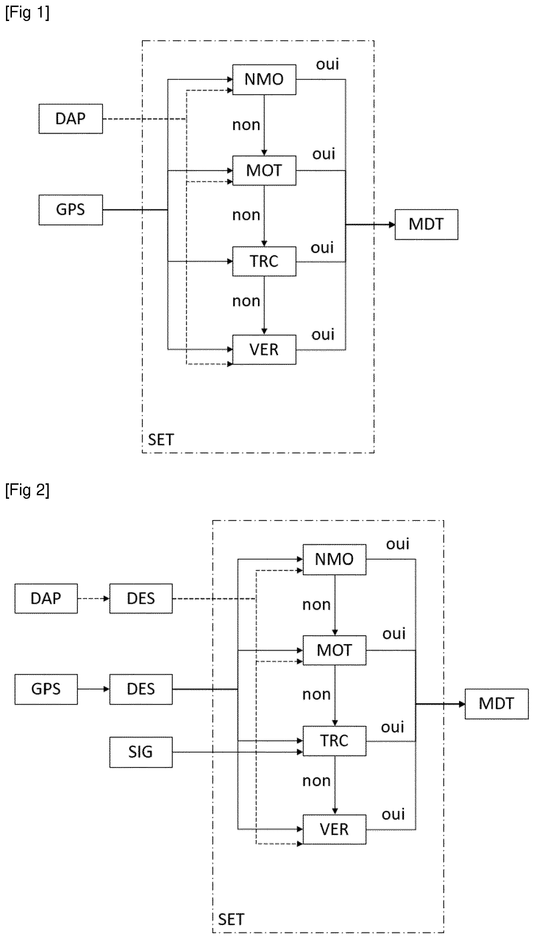

La figure 1 illustre, schématiquement et de manière non limitative, les étapes du procédé selon un premier mode de réalisation de l'invention. Dans un premier temps, on acquiert des données de géolocalisation horodatées GPS. Puis, on applique une succession d'étapes SET pour déterminer le mode de transport MDT. Au sein de la succession d'étapes SET, on met en oeuvre au moins une étape jusqu'à la détermination d'un mode de transport. La figure 1 illustre un ordonnancement possible des étapes. Toutefois, d'autres ordonnancements sont possibles. Au sein de la succession d'étapes SET, on peut mettre en oeuvre dans un premier temps une étape de détermination d'un mode de transport non motorisé NMO. Cette étape NMO utilise également des données de géolocalisation d'apprentissage DAP. Si cette étape NMO détermine un mode de transport non motorisé : « oui », alors la succession d'étapes s'arrête, et le mode de transport MDT est un mode de transport non motorisé. Au contraire, si cette étape NMO ne détermine pas un mode de transport non motorisé : « non », alors la succession d'étapes SET continue vers une étape de détermination d'un mode de transport en motocyclette MOT, qui utilise également des données de géolocalisation d'apprentissage DAP. Si cette étape MOT détermine un mode de transport en motocyclette : « oui », alors la succession d'étapes SET s'arrête, et le mode de transport MDT est un mode de transport en motocyclette. Au contraire, si cette étape MOT ne détermine pas un mode de transport en motocyclette : « non », alors la succession d'étapes SET continue vers une étape de détermination d'un mode de transport en commun hors réseau routier TRC (par exemple : train, avion, métro, tramway). Si cette étape TRC détermine un mode de transport en commun hors réseau routier : « oui », alors la succession d'étapes SET s'arrête, et le mode de transport MDT est un mode de transport en commun hors réseau routier. Au contraire, si cette étape TRC ne détermine pas un mode de transport en commun hors réseau routier : « non », alors la succession d'étapes SET continue vers une étape de détermination d'un mode de transport en véhicule motorisé sur réseau routier VER (par exemple bus ou véhicule automobile), qui utilise également des données de géolocalisation d'apprentissage DAP. Si cette étape détermine un mode de transport en véhicule motorisé sur réseau routier : « oui », alors la succession d'étapes SET s'arrête et le mode de transport MDT est un mode de transport en véhicule motorisé sur réseau routier.

Selon un mode de réalisation de l'invention, le procédé peut comprendre une étape préalable de détermination d'au moins un descripteur dudit trajet parcouru à partir des données de géolocalisation horodatées acquises. Des exemples non limitatifs d'un tel descripteur peuvent être la vitesse de l'utilisateur, l'accélération de l'utilisateur, la puissance spécifique, etc. Pour ce mode de réalisation, les étapes de la succession d'étapes peuvent prendre en compte l'au moins un descripteur du trajet déterminé. En effet, un tel descripteur favorise la mise en oeuvre des différentes étapes de la succession d'étapes.

Pour ce mode de réalisation, le procédé peut comprendre les étapes suivantes :

    1) Acquisition des données de géolocalisation horodatées

    1') Détermination d'au moins un descripteur

    2) Mise en oeuvre d'une succession d'étapes pour la détermination du mode de transport 2.1) Détermination d'un mode de transport non motorisé

    2.2) Détermination d'un mode de transport en motocyclette

    2.3) Détermination d'un mode de transport en commun hors réseau routier

    2.4) Détermination d'un mode de transport en véhicule motorisé sur réseau routier

L'étape 1' peut également être mise en oeuvre par des moyens informatiques, notamment un ordinateur, un serveur ou un téléphone portable. Ces étapes seront détaillées dans la suite de la description.

De manière avantageuse, l'étape de la succession d'étapes de détermination d'un mode de transport en commun hors réseau routier peut être réalisée au moyen d'au moins un système d'information géographique SIG (ou en anglais GIS pour « Géographie information system »). Un tel système d'information géographique peut inclure les voies d'au moins un mode de transport en commun hors réseau routier, par exemple les voies ferrées, les voies de métro, le positionnement des aéroports, etc.

La figure 2 illustre, schématiquement et de manière non limitative, les étapes du procédé selon ce deuxième mode de réalisation. Cette figure illustre une combinaison des deux configurations décrites ci-dessus (SIG, et étape préalable de détermination d'un descripteur), toutefois, ces réalisations sont indépendantes et peuvent être appliquées seules. Les étapes décrites en relation avec la figure 1 ne sont pas redétaillées. Pour ce deuxième mode de réalisation, le procédé comprend une étape supplémentaire de détermination d'au moins un descripteur DES du trajet parcouru à partir des données de géolocalisation horodatées GPS. Cette étape de détermination d'au moins un descripteur DES est également appliquée aux données de géolocalisation d'apprentissage DAP. L'au moins un descripteur DES est mis en oeuvre dans les différentes étapes de la succession d'étapes SET. De plus, un système d'information géographique SIG est utilisé pour l'étape de détermination d'un mode de transport en commun hors réseau routier TRC.

Conformément à une mise en oeuvre de l'invention, le procédé peut mettre en oeuvre une étape d'acquisition des données des véhicules de l'utilisateur, et peut adapter la succession d'étapes par adaptation des étapes en fonction des données des véhicules de l'utilisateur. Par exemple, on peut acquérir, notamment au moyen d'une interface homme-machine, l'ensemble des véhicules appartenant à un utilisateur, par exemple : motocyclette, bicyclette, véhicule automobile, etc. Ces données peuvent ensuite être utilisées dans la succession d'étapes afin d'améliorer la précision de la détermination du mode de transport. En effet, un mode de transport pour lequel l'utilisateur possède un véhicule devient plus probable.

Selon un aspect de l'invention, le procédé peut mettre en oeuvre une étape d'acquisition de l'historique des trajets de l'utilisateur. L'historique des trajets de l'utilisateur peut comprendre les données de géolocalisation horodatées auxquelles sont associées un mode de transport. Dans ce cas, la succession d'étapes peut comprendre une étape supplémentaire de détermination du mode de transport par comparaison du trajet parcouru avec les données historiques des trajets de l'utilisateur. Ainsi, la précision de la détermination du mode de transport peut être améliorée, en particulier pour les trajets réguliers de l'utilisateur : par exemple les trajets domicile-travail. Cette étape supplémentaire peut permettre aussi de réduire le temps de détermination du mode de transport, car moins d'étapes de la succession d'étapes peuvent être utiles.

Selon cet aspect de l'invention, le procédé peut comprendre les étapes suivantes :

1) Acquisition des données de géolocalisation horodatées

2) Mise en oeuvre d'une succession d'étapes pour la détermination du mode de transport

2.1) Détermination d'un mode de transport non motorisé

2.2) Détermination d'un mode de transport en motocyclette

2.3) Détermination d'un mode de transport en commun hors réseau routier

2.4) Détermination d'un mode de transport en véhicule motorisé sur réseau routier

2.5) Comparaison avec un historique

L'étape 2.5 peut également être mise en oeuvre par des moyens informatiques, notamment un ordinateur, un serveur ou un téléphone portable. Ces étapes seront détaillées dans la suite de la description.

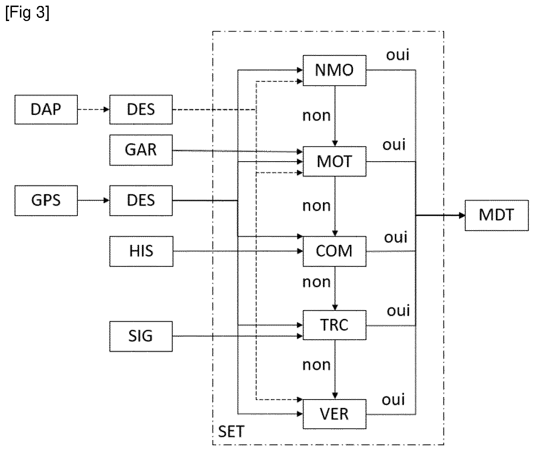

La figure 3 illustre, schématiquement et de manière non limitative, les étapes du procédé selon ce troisième mode de réalisation. Les étapes décrites en relation avec la figure 1 ou la figure 2 ne sont pas redétaillées. Cette figure illustre une combinaison des deux configurations décrites ci-dessus (acquisition des véhicules de l'utilisateur et acquisition des historiques de trajets de l'utilisateur), toutefois, ces réalisations sont indépendantes et peuvent être appliquées seules. Pour ce mode de réalisation, on acquiert au moins un véhicule appartenant à l'utilisateur GAR, et dans au moins une étape de la succession d'étapes, par exemple l'étape de détermination d'un mode de transport en motocyclette MOT, on prend en compte le véhicule appartenant à l'utilisateur. De plus, on acquiert au moins des données historiques de trajets de l'utilisateur HIS avec mode de transport associé, et la succession d'étapes SET comprend une étape supplémentaire de comparaison COM des données de géolocalisation acquises GPS et des données historiques HIS. Pour le mode de réalisation illustré, cette étape de comparaison COM est réalisée entre l'étape de détermination d'un mode de transport en motocyclette MOT et l'étape de détermination d'un mode de transport en commun hors réseau routier TRC. Toutefois, cette étape peut être réalisée à un autre emplacement de la succession d'étapes, par exemple en premier. Si cette comparaison COM permet d'identifier un mode de transport « oui », alors le mode de transport MDT est celui identifié par la comparaison COM, et la succession d'étapes SET se termine. Au contraire, si cette comparaison COM ne permet pas d'identifier un mode de transport « non », alors la succession d'étapes SET continue avec l'étape suivante, pour le mode de réalisation illustré par l'étape de détermination de transport en commun hors réseau routier TRC.

Conformément à un mode de réalisation de l'invention, l'étape de détermination d'un mode de transport en commun hors réseau routier peut comporter plusieurs sous-étapes, chaque sous-étape concernant la détermination d'un unique mode de transport en commun hors réseau routier. En d'autres termes, l'étape de détermination d'un mode de transport en commun hors réseau routier peut comporter une sous-étape de détermination d'un mode de transport en avion, et/ou une sous-étape de détermination d'un mode de transport en train et/ou une sous-étape de détermination d'un mode de transport en tramway et/ou une sous-étape de détermination de transport en métro, etc.

Selon une mise en oeuvre de l'invention, l'étape de détermination d'un mode de transport motorisé sur réseau routier peut comporter plusieurs sous-étapes, chaque sous-étape concernant la détermination d'un unique mode de transport motorisé sur réseau routier. En d'autres termes, l'étape de détermination d'un mode de transport motorisé sur réseau routier peut comporter une sous-étape de détermination d'un mode de transport en véhicule automobile et/ou une sous-étape de détermination d'un mode de transport en bus.

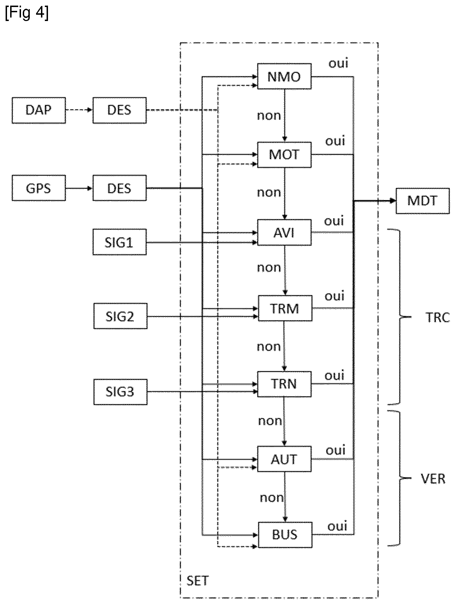

La figure 4 illustre, schématiquement et de manière non limitative, les étapes du procédé selon ce quatrième mode de réalisation. Les étapes décrites en relation avec les figures 1 à 3 ne sont pas redétaillées. Cette figure illustre une combinaison des deux configurations décrites ci-dessus (sous-étapes de détermination du mode de transport en commun et sous-étapes de détermination du mode de transport motorisé sur réseau routier), toutefois, ces réalisations sont indépendantes et peuvent être appliquées seules. Après l'étape de détermination d'un mode de transport en motocyclette MOT, la succession d'étapes SET comprend une étape de détermination d'un mode de transport en commun hors réseau routier TRC. Cette étape de détermination d'un mode de transport en commun hors réseau routier TRC comprend une sous-étape de détermination d'un mode de transport en avion AVI, une sous-étape de détermination d'un mode de transport en tramway TRM et une sous-étape de détermination d'un mode de transport en train TRN. Chacune de ces sous-étapes peut prendre en compte des données issues d'un système d'information géographique SIG. Dans le mode de réalisation illustré, chaque sous-étape peut mettre en oeuvre un système d'information géographique différent, noté respectivement SIG1, SIG2, SIG3. En variante (non représentée), un seul système d'information géographique SIG peut être utilisé pour les trois sous-étapes. Si la sous-étape AVI détermine un mode de transport en commun en avion : « oui », alors la succession d'étapes SET s'arrête, et le mode de transport MDT est un mode de transport en avion. Au contraire, si cette sous-étape AVI ne détermine pas un mode de transport en commun en avion, alors la succession d'étapes SET continue vers une sous-étape de détermination d'un mode de transport en tramway TRM. Si cette sous-étape TRM détermine un mode de transport en commun en tramway : « oui », alors la succession d'étapes SET s'arrête, et le mode de transport MDT est un mode de transport en tramway. Au contraire, si cette sous-étape TRM ne détermine pas un mode de transport en commun en tramway, alors la succession d'étapes SET continue vers une sous-étape de détermination d'un mode de transport en train TRN. Si cette sous-étape TRN détermine un mode de transport en commun en train : « oui », alors la succession d'étapes SET s'arrête et le mode de transport MDT est un mode de transport en train. Au contraire, si cette sous-étape TRN ne détermine pas un mode de transport en commun en train, alors la succession d'étapes SET continue vers une étape de détermination d'un mode de transport en véhicule sur un réseau routier VER. Cette étape de détermination d'un mode de transport en véhicule sur un réseau routier VER comprend une sous-étape de détermination d'un mode de transport en véhicule automobile AUT, et une sous-étape de détermination d'un mode de transport en bus BUS. Si cette sous-étape AUT détermine un mode de transport en véhicule automobile : « oui », alors la succession d'étapes SET s'arrête, et le mode de transport MDT est un mode de transport en véhicule automobile. Au contraire, si cette sous-étape AUT ne détermine pas un mode de transport en véhicule automobile, alors la succession d'étapes SET continue vers une sous-étape de détermination d'un mode de transport en bus BUS. Si cette sous-étape BUS détermine un mode de transport en commun en bus : « oui », alors la succession d'étapes SET s'arrête, et le mode de transport MDT est un mode de transport en bus.

La séquence des sous-étapes dans les étapes TRC et VER sont illustrés dans un ordre, toutefois les sous-étapes peuvent être réalisées dans un ordre différent.

En outre, le mode de réalisation de la figure 4 peut être combiné avec une des configurations de la figure 3 : acquisition de données de véhicules appartenant à l'utilisateur et/ou acquisition de données historiques de trajets parcourus par l'utilisateur et mise en oeuvre d'une étape de comparaison.

### 1) Acquisition des données de géolocalisation horodatées

Lors de cette étape, on acquiert des données de géolocalisation horodatées du trajet parcouru par l'utilisateur, au moyen du capteur de géolocalisation. L'acquisition des données de géolocalisation horodatées peut comprendre la mise en oeuvre de la mesure au cours du trajet parcouru de la géolocalisation horodatée. Dans ce cas, lors de cette étape, on mesure des données de géolocalisation horodatées du trajet parcouru par l'utilisateur, au moyen du capteur de géolocalisation.

Selon un mode de réalisation de l'invention, les données de géolocalisation horodatées du trajet parcouru par l'utilisateur peuvent être enregistrées sur un téléphone intelligent, un objet connecté, un ordinateur ou un serveur.

Selon un aspect de l'invention, cette étape d'acquisition des données de géolocalisation horodatées peut comprendre une étape de pré-traitement des données. Le pré-traitement des données peut comprendre la suppression des données aberrantes, la complétion de la trajectoire, par exemple par une méthode d'interpolation, et le filtrage des données. Ainsi, les données de géolocalisation sont plus facilement exploitables pour les étapes suivantes, ce qui permet une meilleure robustesse et précision de la détermination du mode de transport.

### 1') Détermination d'au moins un descripteur

Lors de cette étape facultative, on détermine au moins un descripteur du trajet au moyen des données de géolocalisation horodatées acquises du trajet parcouru (et éventuellement prétraitées). Un descripteur est une caractéristique du trajet qui se déduit des données de géolocalisation horodatées. Cette étape facultative permet d'obtenir des caractéristiques du trajet parcouru, qui peuvent favoriser la détermination du mode de transport. Par exemple, une vitesse moyenne peut être une caractéristique utile pour la détermination d'un mode de transport non motorisé. Un descripteur peut être défini par une fonction en fonction du temps. Il peut s'agir de l'accélération en fonction du temps.

Selon un aspect de l'invention, le procédé peut déterminer en outre au moins un pré-descripteur. Les pré-descripteurs sont éventuellement des vecteurs multidimensionnels qui sont utilisés pour définir les scalaires unidimensionnels. Les fonctions importantes des pré-descripteurs peuvent notamment être les suivantes : distances entre des points consécutifs obtenus par le capteur de géolocalisation, distance totale cumulée, vitesse, accélération, puissance spécifique et signaux de secousses, positions d'arrêt et de quasi-arrêt (un arrêt partiel court d'un trajet, pouvant correspondre à une pause induite par un feu rouge), etc.

Avantageusement, les fonctions importantes des descripteurs peuvent être les suivantes : fonctions de la vitesse, de l'accélération, de la puissance spécifique et de la secousse, telles que les moyennes, les écarts types, les maximums, les moyennes sur les points positifs/négatifs ou après l'arrêt, différents percentiles, entropies ; fréquence d'arrêt, moyenne/écart de la distance entre les points d'arrêt ; plusieurs mesures différentes de la qualité du signal de géolocalisation, etc. Par conséquent, cette étape donne lieu à un grand nombre de valeurs prétraitées qui décrivent les principales propriétés du trajet parcouru.

### 2) Mise en oeuvre d'une succession d'étapes pour la détermination du mode de transport

Lors de cette étape, on détermine un mode de transport du trajet parcouru au moyen des données de géolocalisation horodatées, et éventuellement au moyen des descripteurs déterminés à l'étape 1', au moyen d'une succession d'étapes. Les étapes de la succession d'étapes sont réalisées jusqu'à la détermination d'un mode de transport. En d'autres termes, une fois qu'une étape a identifié un mode de transport, les autres étapes ne sont pas réalisées. Chaque étape permet de déterminer une catégorie de mode de transport. La spécificité de chaque étape permet une meilleure précision de la détermination. Cette succession d'étapes peut être considérée comme une séquence de « division et conquête » (traduit de l'anglais par « divide and conquer »). Cette succession d'étapes permet de ne pas avoir à exécuter toutes les étapes pour chaque trajet, ce qui simplifie la mise en oeuvre de la détermination du mode de transport. De plus, à chaque étape, le nombre de modes de transport possibles est de plus en plus restreint ce qui favorise une fiabilité et une robustesse de la détermination du mode de transport.

Les étapes de la succession d'étapes peuvent être réalisées dans tout ordre.

Certaines des étapes de la succession d'étapes peuvent mettre en oeuvre des données de géolocalisation horodatées d'apprentissage. De préférence, une étape de de détermination d'au moins un descripteur peut être mise en oeuvre pour les données de géolocalisation horodatées d'apprentissage, de manière préférée conformément à l'étape 1') décrite ci-dessus. Pour cette mise en oeuvre, le terme base de données de géolocalisation d'apprentissage inclut l'au moins un descripteur déterminé.

De manière avantageuse, la succession d'étapes peut mettre en oeuvre d'abord la détermination du mode de transport motorisé ou non. Ainsi, une première discrimination du mode de transport peut être mise en oeuvre. Et après cette étape, si le trajet parcouru n'est pas déterminé en mode de transport non motorisé, il ne reste que des modes de transport motorisé.

Avantageusement, la succession d'étapes peut mettre en oeuvre la détermination d'un mode de transport en motocyclette avant la détermination d'un mode de transport commun hors d'un réseau routier, et avant la détermination d'un mode de transport en véhicule motorisé sur un réseau routier. Ainsi, cela permet de discriminer un déplacement en motocyclette avant les autres modes de transport motorisés, ce qui favorise la détection de ce mode de transport. Alternativement, cette étape peut être mise en oeuvre après l'étape de détermination d'un mode de transport en commun hors réseau routier.

Selon un aspect, la succession d'étapes peut mettre en oeuvre la détermination d'un mode de transport en commun hors réseau routier avant l'étape de détermination d'un mode de transport motorisé sur réseau routier. Ainsi, pour l'étape de détermination d'un mode de transport motorisé sur réseau routier, il ne devrait rester que des trajets empruntant des routes et non des voies dédiées. Alternativement, la détermination d'un mode de transport en commun hors réseau routier peut être mise en oeuvre après l'étape de détermination d'un mode de transport motorisé sur réseau routier.

Pour le mode de réalisation pour lequel un historique de trajets de l'utilisateur avec mode de transport associé est connu, l'étape de comparaison entre les données historiques et les données de géolocalisation horodatées acquises peut être mise en oeuvre au début de la succession d'étapes, pour éviter de réaliser d'autres étapes, si l'étape de comparaison permet de déterminer directement un mode de transport. En variante, cette étape peut être réalisée directement après l'étape de détermination des modes de transport motorisé et/ou directement après l'étape de détermination d'un mode de transport en motocyclette. Plus tôt cette étape est mise en oeuvre dans la succession d'étapes, plus elle peut éviter la réalisation d'un nombre d'étapes si cette comparaison détermine un mode de transport.

Les modes de transport déterminés par le procédé selon l'invention peuvent être choisis parmi :

- la marche à pied, la course à pied, la bicyclette, la trottinette par l'étape de détermination d'un mode de transport non motorisé,

- la motocyclette par l'étape du mode de détermination de transport en motocyclette,

- le tramway, l'avion, le train (y compris le train de type Hyperloop pouvant être traduit par « train à tubes à vide »), le métro par l'étape de détermination d'un mode de transport en commun hors réseau routier (de tels modes de transport en commun se déplacent sur des voies dédiées différentes des routes), et

- le véhicule automobile, le bus par l'étape de détermination d'un transport en véhicule motorisé sur réseau routier.

2.1) Détermination d'un mode de transport non motorisé

Lors de cette étape, on détermine, en fonction des données de géolocalisation acquises à l'étape 1, si le trajet parcouru est réalisé dans un mode de transport non motorisé, au moyen d'un modèle entraîné à partir des données de géolocalisation horodatées d'apprentissage et/ou au moyen d'un filtre heuristique construit à partir des données de géolocalisation horodatées d'apprentissage.

Selon un mode de réalisation, le modèle entraîné et/ou le filtre heuristique peut déterminer en outre une probabilité d'un mode de transport non motorisé, choisi notamment entre la marche à pied, la course à pied et la bicyclette. On peut déterminer alors un mode de transport dans le cas d'une probabilité supérieure à un seuil prédéterminé.

Conformément une mise en oeuvre, cette étape peut mettre en oeuvre à la fois le modèle entraîné et le filtre heuristique pour une vérification des résultats, ce qui permet une bonne fiabilité de la détection d'un mode de transport non motorisé ou motorisé.

Un modèle entraîné est un modèle construit à partir de données. De préférence, le modèle peut être entraîné à partir des données de géolocalisation horodatées d'apprentissage par apprentissage automatique (de l'anglais « machine learning »). En d'autres termes, les données de géolocalisation horodatées d'apprentissage forment une base d'apprentissage pour l'apprentissage automatique. Préférentiellement, l'apprentissage automatique peut être un réseau de neurones artificiels. En variante, l'apprentissage automatique peut mettre en d'autres méthodes d'apprentissage automatique.

Pour cet apprentissage automatique, on peut mettre en oeuvre les étapes suivantes :

1) étape initiale de sélection des données dans la base d'apprentissage pour sélectionner les données de trajets antérieurs utilisés pour l'apprentissage automatique (lié à la discrimination entre mode de transport motorisé et mode de transport non motorisé) et, si la quantité de données est insuffisante, des méthodes de pondération des données sont également envisagées,

2) sélection des descripteurs en utilisant les statistiques d'information mutuelle ; en général, entre 6 et 20 descripteurs peuvent être sélectionnés, par exemple les descripteurs peuvent être choisis parmi les distances entre des points consécutifs obtenues par le capteur de géolocalisation, distance totale cumulée, vitesse, accélération, puissance spécifique et signaux de secousses, positions d'arrêt et de quasi-arrêt, etc.,

3) architecture de réseau du neurones artificiels standard définie par une couche d'entrée avec un noeud pour chaque descripteur, au moins une couche cachée, et une couche de sortie pouvant fournir une probabilité de chaque mode de transport non motorisé (selon un exemple non limitatif une probabilité de marche à pied, une probabilité de course à pied et une probabilité de bicyclette).

Selon un exemple non limitatif, le réseau de neurones peut comprendre une couche d'entrée avec un nombre de noeuds correspondant au nombre de descripteur, deux couches cachées de taille respective huit et quatre, et une couche de sortie fournissant les probabilités de chaque mode. Les fonctions d'activation peuvent être l'unité linéaire rectifiée (ReLU) et Softmax, l'optimiseur peut être l'estimation du moment adaptatif (Adam), la fonction de perte peut être la cross entropie catégorielle, la précision métrique maximisée, la régularisation L2 pour éviter le surajustement.

Le filtre heuristique est basé sur une analyse statistique desdites données de géolocalisation d'apprentissage. Ainsi, le filtre heuristique est un ensemble de conditions simples et conservatrices sur des caractéristiques sélectionnées et basées sur des analyses statistiques. Son principal objectif est d'éviter les erreurs aberrantes qui peuvent perturber l'expérience de l'utilisateur. La sortie est un vecteur des modes possibles restant après élimination.

Pour le mode de réalisation mettant en oeuvre un filtre heuristique, seuls les modes de transport identifiés comme possibles par ce filtre heuristique peuvent être considérés pour la suite de la succession d'étapes. Ainsi, le nombre d'étapes mises en oeuvre dans le procédé peut être limité.

### 2.2) Détermination d'un mode de transport en motocyclette

Lors de cette étape, on détermine, en fonction des données de géolocalisation acquises à l'étape 1, si le trajet parcouru est réalisé dans un mode de transport en motocyclette, au moyen d'un modèle entraîné à partir des données de géolocalisation horodatées d'apprentissage.

Un modèle entraîné est un modèle construit à partir de données. Ce modèle peut donner une probabilité d'un trajet parcouru en motocyclette. De préférence, le modèle peut être entraîné à partir des données de géolocalisation horodatées d'apprentissage par apprentissage automatique (de l'anglais « machine learning »). En d'autres termes, les données de géolocalisation horodatées d'apprentissage forment une base d'apprentissage pour l'apprentissage automatique. Préférentiellement, l'apprentissage automatique peut être un réseau de neurones artificiels.

Pour cet apprentissage automatique, on peut mettre en oeuvre les étapes suivantes :

1) étape initiale de sélection des données dans la base d'apprentissage pour sélectionner les données de trajets antérieurs utilisés pour l'apprentissage automatique (lié à la discrimination des transports en motocyclette) et, si la quantité de données est insuffisante, des méthodes de pondération des données sont également envisagées,

2) sélection des descripteurs en utilisant les statistiques d'information mutuelle ; en général, entre 6 et 20 descripteurs peuvent être sélectionnés, par exemple les descripteurs peuvent être choisis parmi les distances entre des points consécutifs obtenues par le capteur de géolocalisation, distance totale cumulée, vitesse, accélération, puissance spécifique et signaux de secousses, positions d'arrêt et de quasi-arrêt, etc.,

3) architecture de réseau du neurones artificiels standard définie par une couche d'entrée avec un noeud pour chaque descripteur, au moins une couche cachée, et une couche de sortie pouvant fournir une probabilité du mode de transport en motocyclette.

Selon un exemple non limitatif, le réseau de neurones artificiels peut comprendre une couche d'entrée avec un nombre de noeuds correspondant au nombre de descripteurs, deux couches cachées de taille respective huit et quatre, et une couche de sortie fournissant la probabilité du mode de transport en motocyclette. Les fonctions d'activation peuvent être l'unité linéaire rectifiée (ReLU) et Softmax, l'optimiseur peut être l'estimation du moment adaptatif (Adam), la fonction de perte peut être la cross entropie catégorielle, la précision métrique maximisée, la régularisation L2 pour éviter le surajustement.

Pour le mode de réalisation pour lequel on acquiert les données des véhicules de l'utilisateur, si l'utilisateur indique posséder une motocyclette alors la probabilité du mode de transport en motocyclette obtenu par le modèle entraîné peut être augmenté.

Si la probabilité déterminée par le modèle entraîné (éventuellement ajusté en fonction des véhicules appartenant à l'utilisateur) est supérieure à un seuil prédéfini, on détermine le mode de transport en tant que motocyclette.

2.3) Détermination d'un mode de transport en commun hors réseau routier

Lors de cette étape, on détermine, en fonction des données de géolocalisation acquises à l'étape 1, si le trajet parcouru est réalisé dans un mode de transport en commun hors réseau routier, au moyen d'au moins un algorithme de cartospondance (de l'anglais « mapmatching » pouvant également être traduit par correspondance géographique). Pour cet algorithme de cartospondance, on peut utiliser un système d'information géographique SIG (ou en anglais GIS pour « Géographie information system »). Here Maps™, Google Maps™, OpenStreetMap™, etc. sont des exemples de système d'information géographique SIG. Un tel système d'information géographique SIG peut contenir les voies dédiées des modes de transport en commun hors réseau routier, par exemple les voies ferrées, la position des aéroports, etc. Lors de cette étape, on compare le trajet parcouru avec une voie ou un lieu identifié par le SIG pour un tel mode de transport. Si le trajet parcouru est similaire avec une voie spécifique identifiée par le SIG alors le mode de transport est celui qui correspond à la voie spécifique.

Conformément à un mode de réalisation de l'invention, l'étape de détermination d'un mode de transport en commun hors réseau routier peut comporter plusieurs sous-étapes, chaque sous-étape concernant la détermination d'un unique mode de transport en commun hors réseau routier. En d'autres termes, l'étape de détermination d'un mode de transport en commun hors réseau routier peut comporter une sous-étape de détermination d'un mode de transport en avion, et/ou une sous-étape de détermination d'un mode de transport en train et/ou une sous-étape de détermination d'un mode de transport en tramway et/ou une sous-étape de détermination de transport en métro, etc.

Selon un mode de réalisation, on peut appliquer un algorithme de cartospondance par mode de transport en commun hors réseau routier. En d'autres termes, pour chaque sous-étape de cette étape, on peut appliquer un algorithme de cartospondance. Pour ce mode de réalisation, il peut être prévu un système d'information géographique par mode de transport, ou un unique système d'information géographique qui comprend tous les modes de transport considérés.

Conformément à une mise en oeuvre, la similarité entre le trajet parcouru et la voie spécifique identifiée par le SIG peut être obtenue au moyen d'un distance déterminée entre le trajet et la voie identifiée par exemple au moyen de la distance d'Hausdorff.

Pour l'éventuelle sous-étape de détermination d'un mode de transport en avion, on peut mettre en oeuvre les opérations suivantes. Contrairement à ce qu'on pourrait penser, la détection d'avion n'est pas triviale puisque ces trajets sont généralement représentés par des données de géolocalisation très pauvres, parfois visuellement indiscernables des trajets en train. La sous-étape de détermination d'un mode de transport en avion peut être basée sur des conditions cartographiques et standard. Les conditions standard peuvent être basées sur des descripteurs tels que la distance totale cumulée et la vitesse moyenne ou supérieure à un signal filtré. Les conditions cartographiques peuvent être basées sur les intersections et peuvent utiliser la trajectoire complète, des voisinages relativement petits autour des points de départ et d'arrivée des trajectoires, et la position géographique de plusieurs aéroports autour du monde. En conséquence, cette sous-étape est capable de fournir une réponse binaire indiquant si le trajet correspond à un avion ou non. Dans le premier cas, selon un mode de réalisation, un degré de confiance peut également être donné (par exemple faible, moyen ou élevé).

Pour l'éventuelle sous-étape de détermination d'un mode de transport en tramway, on peut mettre en oeuvre les opérations suivantes. La détection de tramways par des techniques de « map-matching » est considérée comme complexe. En effet, la prise en compte des réseaux ferroviaires peut entraîner un temps de calcul considérable et des efforts ont été faits pour le réduire. Selon un mode de réalisation de l'invention, cette sous-étape peut contenir une opération supplémentaire de nettoyage de la trajectoire, par exemple pour supprimer les points de géolocalisation répétés. L'outil principal pour la mise en correspondance des cartes dans ce cas peut être la distance de Hausdorff entre le réseau ferroviaire de tramway et le trajet parcouru (avec les données de géolocalisation horodatées acquises). Pour cette sous-étape, le trajet parcouru peut être appelé trajectoire. La distance de Hausdorff est un choix populaire pour mesurer la similarité entre des objets géométriques. Plus en détail, cette sous-étape peut suivre les étapes suivantes : 1) une dilatation de la trajectoire est intersectée avec le réseau de tramway, 2) on mesure la distance de Hausdorff entre la trajectoire et cette intersection, 3) on définit un recouvrement tramway comme le rapport entre : 3.1) le nombre de points de la trajectoire à l'intérieur d'une version dilatée de l'intersection précédente (la dilatation dépend de la précision du signal), et 3.2) le nombre de points de la trajectoire, 4) on définit la distance de Hausdorff pondérée comme le rapport entre la distance de Hausdorff et la couverture ferroviaire déterminée en 3). Enfin, un seuil sur la distance est réglé afin de déterminer si une trajectoire est effectuée par un tramway ou non, en d'autres termes si le mode de transport est le tramway ou non.

Pour l'éventuelle sous-étape de détermination d'un mode de transport en train, on peut mettre en oeuvre les mêmes opérations que celles pour le tramway. La différence peut résider dans le réglage des paramètres, notamment, le seuil de distance peut être considérablement plus grand.

Pour l'éventuelle sous-étape de détermination d'un mode de transport en métro, notamment en métro aérien, on peut mettre en oeuvre les mêmes opérations que celles pour le tramway. La différence peut résider dans le réglage des paramètres, par exemple le seuil de distance.

### 2.4) Détermination d'un mode de transport en véhicule motorisé sur réseau routier

Lors de cette étape, on détermine, en fonction des données de géolocalisation acquises à l'étape 1, si le trajet parcouru est réalisé dans un mode de transport en véhicule motorisé sur réseau routier, au moyen d'au moins un modèle entraîné à partir des données de géolocalisation horodatées d'apprentissage.

Un modèle entraîné est un modèle construit à partir de données. De préférence, le modèle peut être entraîné à partir des données de géolocalisation horodatées d'apprentissage par apprentissage automatique (de l'anglais « machine learning »). En d'autres termes, les données de géolocalisation horodatées d'apprentissage forment une base d'apprentissage pour l'apprentissage automatique. Préférentiellement, l'apprentissage automatique peut être un réseau de neurones artificiels.

Pour cet apprentissage automatique, on peut mettre en oeuvre les étapes suivantes :

1) étape initiale de sélection des données dans la base d'apprentissage pour sélectionner les données de trajets antérieurs utilisés pour l'apprentissage automatique (lié à la discrimination entre mode de transport motorisé sur réseau routier) et, si la quantité de données est insuffisante, des méthodes de pondération des données sont également envisagées,

2) sélection des descripteurs en utilisant les statistiques d'information mutuelle ; en général, entre 6 et 20 descripteurs peuvent être sélectionnés, par exemple les descripteurs peuvent être choisis parmi les distances entre des points consécutifs obtenues par le capteur de géolocalisation, distance totale cumulée, vitesse, accélération, puissance spécifique et signaux de secousses, positions d'arrêt et de quasi-arrêt, etc.,

3) architecture de réseau du neurones artificiels standard définie par une couche d'entrée avec un noeud pour chaque descripteur, au moins une couche cachée, et une couche de sortie pouvant fournir une probabilité du mode de transport en motocyclette.

Selon un exemple non limitatif, le réseau de neurones artificiels peut comprendre une couche d'entrée avec un noeud par descripteur, deux couches cachées de taille huit et quatre, et une couche de sortie fournissant la probabilité du mode de transport en bus ou en véhicule automobile. Les fonctions d'activation peuvent l'unité linéaire rectifiée (ReLU) et Softmax, l'optimiseur peut être l'estimation du moment adaptatif (Adam), la fonction de perte peut être la cross entropie catégorielle, la précision métrique maximisée, la régularisation L2 pour éviter le surajustement.

Selon un mode de réalisation de l'invention, cette étape peut comporter une sous-étape de détermination d'un mode de transport en véhicule automobile et une sous-étape de détermination d'un mode de transport en bus. Ainsi, il est plus facile de discriminer le mode de transport utilisé.

Pour l'éventuelle sous-étape de détermination d'un mode de transport en véhicule automobile, on peut mettre en oeuvre les opérations suivantes : on peut mettre en oeuvre un produit de deux réseaux de neurones : un premier réseau de neurones entraîné à distinguer le véhicule automobile du bus (pour ce premier réseau de neurones, les descripteurs peuvent être notamment le nombre d'arrêts par kilomètre, la moyenne et l'écart-type de la vitesse, un percentile des vitesses les plus élevées, la puissance spécifique, etc.), et le second réseau de neurones entraîné à distinguer le véhicule automobile de la motocyclette (pour ce deuxième réseau de neurones, les descripteurs peuvent être notamment la moyenne de l'accélération pour les points où la vitesse est positive, l'accélération moyenne après un arrêt, la puissance spécifique, l'accélération maximale, etc.). Grâce à ces deux réseaux de neurones, la détermination d'un mode de transport en véhicule automobile est fiable.

Pour l'éventuelle sous-étape de détermination d'un mode de transport en bus, on peut mettre en oeuvre les opérations décrites ci-après. On peut mettre en oeuvre un réseau de neurones qui détermine une ou deux caractéristiques spécifiques. Pour la première caractéristique, on peut déterminer un score basé sur la proximité de la trajectoire des données de géolocalisation avec les arrêts de bus proches (qui peuvent être obtenus par des informations cartographiques, par exemple au moyen d'un système d'information géographique). Pour la deuxième caractéristique, on peut déterminer le cas échéant (pour le mode de réalisation pour lequel on acquiert des données historiques de trajet de l'utilisateur), un ratio entre le nombre de trajets en bus sur le nombre total de trajets réalisés par l'utilisateur.

2.5) Comparaison avec un historique

Lors de cette étape facultative, on acquiert des données historiques des trajets de l'utilisateur. L'historique des trajets de l'utilisateur peut comprendre, pour des trajets antérieurs, les données de géolocalisation horodatées de l'utilisateur auxquelles sont associés un mode de transport. Dans ce cas, la succession d'étapes peut comprendre une étape supplémentaire de détermination du mode de transport par comparaison du trajet parcouru avec les données historiques de trajets de l'utilisateur. Ainsi, la précision de la détermination du mode de transport peut être améliorée, en particulier pour les trajets réguliers de l'utilisateur : par exemple les trajets domicile-travail. Cette étape supplémentaire peut permettre aussi de réduire le temps de détermination du mode de transport, car moins d'étapes de la succession d'étapes peuvent être utiles.

Pour cette comparaison, on peut mettre en détermination du mode de transport au moyen d'une similarité entre le trajet parcouru et au moins un trajet de l'historique. Cette similarité peut être déterminée par une distance entre le trajet parcouru et un trajet de l'historique, la distance peut être par exemple une distance de Hausdorff (notamment lorsque qu'on compare des signaux de vitesse) ou une distance de Fréchet (notamment lorsque qu'on compare des données de géolocalisation).

Selon un mode de réalisation de l'invention, on peut fixer certaines règles de collecte de données pour trouver un sous-ensemble de trajets de l'historique candidats parmi ceux réalisées par l'utilisateur. Puis, on peut classer ces trajets en fonction d'une notion de similarité et de recouvrement entre les paires de trajets. La notion employée peut être une version modifiée de la distance de Fréchet discrète qui a été notamment décrite dans la demande de brevet FR3112398 (US 2022/010220), en particulier dans la partie « Détermination de la distance modifiée de Fréchet discrète ». Cette distance permet de mesurer la similarité entre deux trajectoires multi-dimensionnelles, de tailles éventuellement différentes, sur la base d'une association optimisée de leurs points. Cette association peut être illustrée par l'analogie de la détermination de la taille minimale de la laisse dont un homme a besoin pour promener son chien sans faire marche arrière, et la distance peut être calculée en utilisant des techniques de programmation dynamique. La formule pour la version continue de la distance de Fréchet entre deux courbes A et B peut être donnée par

$$F(A,B) = \inf_{\alpha,\beta} \max_{t\in[0,1]} d\Big(A\big(\alpha(t)\big), B\big(\beta(t)\big)\Big)$$

où « inf » désigne l'infimum d'un ensemble de valeurs, d est la distance de Haversine entre les points de coordonnées, et où $\alpha$ et $\beta$ sont des « paramétrisations » des courbes respectivement A et B. Le calcul de la distance de Fréchet entre deux séquences finies de points est possible via sa version discrète, qui peut être résolue par programmation dynamique. De plus, l'appariement dit optimal entre les trajectoires peut également être obtenu de manière explicite. Par exemple, au lieu de considérer le maximum, on peut utiliser la distance moyenne qui est plus robuste aux aberrations restantes dans les trajectoires de géolocalisation. Comme sous-produit, la même association de points donne lieu à une notion de couverture de trajectoire. Enfin, afin d'éviter les erreurs d'étiquetage de trajets spatialement similaires effectués sur des modes de transport différents, on peut renforcer la méthode avec la distance dite de Hausdorff entre les signaux de vitesse correspondants. Si cette étape est en mesure de trouver un candidat de trajet historique satisfaisant, le mode de transport de ce trajet historique est attribué au trajet parcouru.

L'invention a ainsi pour objet l'analyse de la mobilité des personnes, et plus précisément de leur choix de mode de transport pour leurs déplacements, afin de constater les impacts de la mobilité sur les émissions de polluant et la qualité de l'air. Elle peut ainsi permettre de déterminer les émissions de polluants.

Un autre objet de l'invention consiste à suivre l'évolution des choix de mode de transport des personnes lors de leurs déplacements au cours du temps de manière à évaluer les stratégies mises en place par les pouvoirs publics (aménagements routiers, transport en commun, mobilité douce) et à orienter les choix de développement des aménagements routiers, transports en communs et mobilité douce en fonction des modes de transport des utilisateurs. L'invention peut, pour se faire, servir à déterminer les choix de modes de transport des utilisateurs d'une zone géographique plus régulièrement (par ex. tous les mois), sans devoir attendre de nouvelles enquêtes statistiques (enquêtes ménages-déplacements menées tous les 5 à 10 ans).

Comme il va de soi, l'invention ne se limite pas aux seules formes de réalisation décrites ci-dessus à titre d'exemple, elle embrasse au contraire toutes les variantes de réalisation.

Exemples

Les caractéristiques et avantages du procédé selon l'invention apparaîtront plus clairement à la lecture des exemples d'application ci-après.

Pour les différents exemples décrits ci-après, on applique le procédé selon le mode de la réalisation de la figure 4, en ce qui concerne l'ordonnancement des étapes de la succession d'étapes, en ajoutant l'étape de comparaison aux données historiques de trajets de l'utilisateur (étape 2.5) telle qu'illustrée en figure 3. De plus, le procédé met en oeuvre une étape de pré-traitement des données de géolocalisation horodatées acquises. Pour ce procédé, les données de géolocalisation utilisées pour l'apprentissage représentent environ 90 millions de km parcourus avec un mode de transport identifié. De plus le système d'information géographique est OpenStreetMap™.

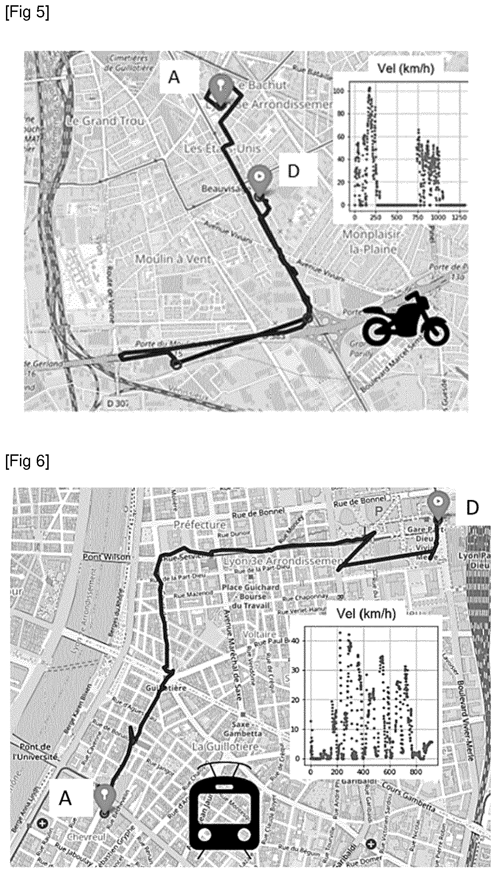

Dans un premier exemple, on acquiert des données de géolocalisation horodatées d'un premier trajet au moyen d'un système GPS présent sur un téléphone intelligent. L'identification du mode de transport de cette trajectoire est particulièrement difficile : trajectoire courte et relativement lente à l'intérieur d'une ville et à proximité des réseaux ferroviaires. Pour le trajet acquis, on obtient une durée totale d'environ 25 min et une distance totale d'environ 7 km. La figure 5 illustre, schématiquement, sur une carte routière le trajet acquis entre un point de départ D et une arrivée A. Cette figure 5 illustre également un descripteur du trajet acquis : la vitesse du véhicule. Cependant, malgré le pré-traitement, les points GPS enregistrés restent affectés par le bruit et les caractéristiques associées du trajet peuvent être trompeuses lorsqu'elles sont considérées isolément. Cela complique encore la tâche de détermination du mode de transport. Dans un premier temps, le filtre heuristique fonctionne avec le réseau de neurones pour le mode de transport non motorisé pour éliminer les modes de transport non motorisé : marche, course, vélo et trottinette. En effet, la probabilité d'un mode de transport motorisé donnée par ce modèle est proche d'un. Ensuite, le réseau de neurones d'un mode de transport en motocyclette détermine une probabilité de 0,88, ce qui est bien supérieur au seuil prédéterminé correspondant fixé à 0,65. Par conséquent, la succession d'étapes s'arrête à ce stade et détermine le mode de transport « motocyclette ». L'utilisateur a approuvé cette classification manuellement. Par conséquent, le procédé selon l'invention permet bien d'identifier le bon mode de transport utilisé.

Dans un deuxième exemple, on acquiert des données de géolocalisation horodatées d'un deuxième trajet au moyen d'un système GPS présent sur un téléphone intelligent. La figure 6 illustre, schématiquement, sur une carte routière le trajet acquis entre un point de départ D et une arrivée A. Cette figure 6 illustre également un descripteur du trajet acquis : la vitesse du véhicule. Dans un premier temps, le filtre heuristique fonctionne avec le réseau de neurones pour le mode de transport non motorisé pour éliminer les modes de transport : marche, course, vélo et trottinette. En effet, la probabilité d'un mode de transport motorisé donnée par ce modèle est proche de 0,65. Ensuite, le réseau de neurones d'un mode de transport en motocyclette détermine une probabilité de 0,2, ce qui est bien inférieur au seuil prédéterminé correspondant fixe à 0,65. Ensuite, l'étape de comparaison (au moyen de la distance de Fréchet discrète) avec des données historiques de trajet n'est pas concluant. Ensuite, les algorithmes de cartospondance avec respectivement l'avion et le train ne permettent pas de déterminer le mode de transport : aucune correspondance n'est trouvée entre des polygones d'un aéroport ou avec des rails de train. Ensuite, une correspondance est trouvée par l'algorithme de cartospondance avec le tramway, avec une distance de correspondance de 0,3 unités et une couverture ferroviaire de 70%. Par conséquent, la succession s'arrête à ce stade et détermine le mode de transport « tramway ». L'utilisateur a approuvé cette classification manuellement. Par conséquent, le procédé selon l'invention permet bien d'identifier le bon mode de transport utilisé.

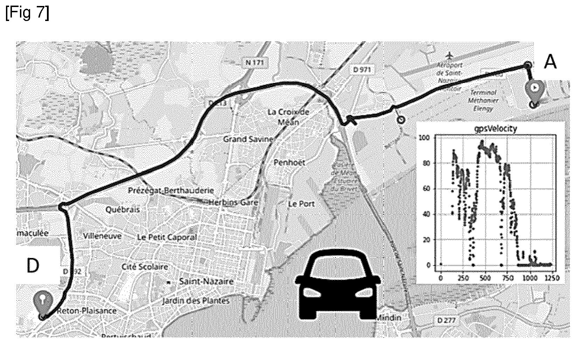

Dans un troisième exemple, on acquiert des données de géolocalisation horodatées d'un troisième trajet au moyen d'un système GPS présent sur un téléphone intelligent. La figure 7 illustre, schématiquement sur une carte routière le trajet acquis entre un point de départ D et une arrivée A. Cette figure 7 illustre également un descripteur du trajet acquis : la vitesse du véhicule. Dans un premier temps, le filtre heuristique fonctionne avec le réseau de neurones pour le mode de transport non motorisé pour éliminer les modes de transport : marche, course, vélo et trottinette. En effet, la probabilité d'un mode de transport motorisé donnée par ce modèle est proche de 0,7. Ensuite, le réseau de neurones d'un mode de transport en motocyclette détermine une probabilité de 0,3, ce qui est bien inférieur au seuil fixe correspondant de 0,65. Ensuite, l'étape de comparaison (au moyen de la distance de Fréchet discrète) avec des données historiques de trajet permet d'identifier une similarité avec un trajet historique réalisé en véhicule automobile. Par conséquent, la succession s'arrête à ce stade et détermine le mode de transport « véhicule automobile ». L'utilisateur a approuvé cette classification manuellement. Par conséquent, le procédé selon l'invention permet bien d'identifier le bon mode de transport utilisé. On peut noter en outre, que si la succession d'étapes avait continué, le même mode de transport aurait été identifié : les correspondances avion, tramway et train sont au-delà du seuil de correspondance, au contraire du produit des deux réseaux de neurones pour identifier un mode de transport en véhicule automobile.

Ces trois exemples montrent en outre, que le procédé selon l'invention permet identifier plusieurs modes de transport différents de manière fiable.

**Revendications**

1. Procédé de détermination d'un mode de transport d'un trajet parcouru par au moins un utilisateur, au moyen d'un capteur de géolocalisation, **caractérisé en ce qu'**on met en oeuvre les étapes suivantes :

    a. On acquiert des données de géolocalisation horodatées (GPS) dudit trajet parcouru par ledit utilisateur au moyen dudit capteur de géolocalisation ;

    b. On détermine un mode de transport (MDT) dudit trajet au moyen desdites données de géolocalisation horodatées acquises (GPS), en mettant en oeuvre une succession d'étapes (SET) jusqu'à la détermination dudit mode de transport, les étapes de ladite succession d'étapes (SET) étant choisies parmi au moins les étapes suivantes :

        i. On applique auxdites données de géolocalisation horodatées (GPS) acquises un modèle entraîné à partir de données de géolocalisation horodatées d'apprentissage (DAP) et/ou un filtre heuristique construit à partir desdites données de géolocalisation d'apprentissage (DAP) pour déterminer si le mode de transport est motorisé ou non (NMO) ;

        ii. On applique auxdites données de géolocalisation horodatées acquises (GPS) un modèle entraîné à partir de données de géolocalisation horodatées d'apprentissage (DAP) pour déterminer si le mode de transport est la motocyclette (MOT) ;

        iii. On applique auxdites données de géolocalisation horodatées (GPS) acquises au moins un algorithme de cartospondance pour déterminer si le mode de transport est un transport en commun (TRC) ne circulant pas sur un réseau routier ; et

        iv. On applique auxdites données de géolocalisation horodatées (GPS) acquises au moins un modèle entraîné à partir de données de géolocalisation horodatées d'apprentissage (DAP) pour déterminer si le mode de transport est un véhicule circulant sur un réseau routier (VER).

2. Procédé selon la revendication 1, dans lequel on acquiert des données historiques (HIS) de trajets dudit utilisateur, et ladite succession d'étapes comprend en outre une étape de comparaison (COM) desdites données de géolocalisation horodatées (GPS) acquises avec lesdites données historiques, et on détermine le mode de transport si les données de géolocalisation horodatées acquises sont similaires avec lesdites données historiques d'au moins un trajet, de préférence on détermine une similarité au moyen de calcul d'une distance, telle que la distance de Fréchet ou la distance d'Hausdorff.

3. Procédé selon l'une des revendications précédentes, dans lequel ledit mode de transport (MDT) est déterminé parmi la marche à pied, la course à pied, la bicyclette, la motocyclette, le tramway, l'avion, le train, le métro, le véhicule automobile et le bus.

4. Procédé selon l'une des revendications précédentes, dans lequel le procédé comprend une étape préalable de détermination d'au moins un descripteur (DES) dudit trajet à partir desdites données de géolocalisation horodatées acquises (GPS), et au moins une étape de ladite succession d'étapes (SET) prend en compte ledit au moins un descripteur (DES).

5. Procédé selon l'une des revendications précédentes, dans lequel la détermination d'un mode de transport en commun (TRC) ne circulant pas sur un réseau routier est mise en oeuvre au moyen d'un algorithme de cartospondance et de la distance d'Hausdorff.

6. Procédé selon l'une des revendications précédentes, dans lequel on acquiert des données de véhicules appartenant audit utilisateur (GAR), et on adapte ladite succession d'étapes (SET) en fonction desdites données de véhicules appartenant audit utilisateur.

7. Procédé selon l'une des revendications précédentes, dans lequel lesdits modèles sont entraînés à partir de données de géolocalisation horodatées d'apprentissage (DAP) par apprentissage automatique au moyen d'au moins un réseau de neurones.

8. Procédé selon l'une des revendications précédentes, dans lequel ladite succession d'étapes (SET) met d'abord en oeuvre la détermination d'un mode de transport motorisé ou non (NMO).

9. Procédé selon l'une des revendications précédentes, dans lequel ladite succession d'étapes (SET) met en oeuvre la détermination d'un mode de transport en motocyclette (MOT) avant la détermination d'un mode de transport en transport en commun ne circulant pas sur un réseau routier (TRC) et avant la détermination d'un mode de transport circulant sur un réseau routier (VER).

10. Procédé selon l'une des revendications précédentes, dans lequel ladite succession d'étapes (SET) met en oeuvre la détermination d'un mode de transport en commun (TRC) ne circulant pas sur un réseau routier avant la détermination d'un mode de transport circulant sur un réseau routier (VER).

11. Procédé selon l'une des revendications précédentes, dans lequel ledit filtre heuristique est basé sur une analyse statistique desdites données de géolocalisation horodatées d'apprentissage (DAP).

**12.** Procédé selon l'une des revendications précédentes, dans lequel on applique un algorithme de cartospondance par mode de transport en commun (TRC) ne circulant pas sur un réseau routier.

**13.** Procédé selon l'une des revendications précédentes, dans lequel si le mode de transport est déterminé non motorisé, ledit modèle entraîné et/ou ledit filtre heuristique détermine en outre le type de transport non motorisé.

[Fig 1]

[Fig 2]

[Fig 3]

[Fig 4]

[Fig 5]

[Fig 6]

[Fig 7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2113219
- FR 3112398
- US 2022010220 A